# EUROPEAN PATENT APPLICATION

(11) **EP 4 567 769 A1**
(43) Date of publication of application: **11.06.2025**
(21) Application number: 24215985.3
(22) Date of filing: 28.11.2024
(51) Int. Cl.: G09B 9/30, G09B 9/22, G09B 9/24, G09B 9/26, G09B 9/28, G09B 9/05, G09B 9/06, G09B 9/52

(54) **VIRTUAL REALITY FLIGHT SIMULATOR**

(30) Priority: 28.11.2023 US 202363603531 P; 26.09.2024 US 202463699667 P
(71) Applicant: Loft Dynamics AG, 8200 Schaffhausen (CH)
(72) Inventor: Marty, Christian, 8200 Schaffhausen (CH); Riesen, Fabian, 8200 Schaffhausen (CH); Wuethrich, Tobias, 8200 Schaffhausen (CH); Locher, Simon, 8200 Schaffhausen (CH); Hegner, Robert, 8200 Schaffhausen (CH); Diethelm, Hannes, 8200 Schaffhausen (CH)
(74) Representative: Bittner, Bernhard

(57) **Abstract**

A virtual reality flight simulator includes recording flight simulation data to produce a simulated flight demonstration. The flight simulation data including flight visual re-creation data for recreating flight visuals, physical control element states, instructor user body states, trainee user body states, and/or auditory data. The simulated flight demonstration is validated for correctness. The validated simulated flight demonstration is played to at least one trainee user in a virtual environment of a flight simulation training device (FSTD). The virtual environment is viewable by the trainee user on at least one visual interface. The validated simulated flight demonstration includes time-synchronized playback of the recorded flight simulation data.

## Description

### Field of the Disclosure

The present disclosure relates to flight simulation. The disclosure has particular utility in virtual reality flight simulators, optionally providing a realistic instructor demonstration. and will be described in connection with such utility, although other utilities are contemplated.

### Background and Summary

This section provides background information related to the present disclosure which is not necessarily prior art. This section provides a general summary of the disclosure and is not a comprehensive disclosure of its full scope or all its features.

The availability of experienced and talented flight instructors is a limitation for flight training, and thus, contributes to pilot shortage. The demand for high quality flight training in simulators or in aircraft far exceeds that supply. In addition, there is currently a significant lack of standardization of the content and especially quality of flight training, and in particular, with flight maneuvers taught by instructors. Due to the lack of standardization, methods of evaluating the effectiveness of changes to flight training can be used only in limited environments and scale.

Replicable training content, such as online videos or other recorded training material, do not provide immersive and realistic physical cues of flight. As such, while they can provide pilot trainees with information, they cannot successfully replicate a realistic setting of the training scenario.

Flight simulation can be used to artificially generate avionics operations including ground operations, aircraft flight, and an environment in which the aircraft operates, for pilot training, aircraft design, or other purposes. Flight simulators typically virtually recreate situations of avionics operations, including how aircraft react to applications of flight controls, the effects of other aircraft systems, and how the aircraft reacts to external factors such as air density, turbulence, wind shear, cloud, precipitation, etc. Flight simulation is used for a variety of reasons, including for training and certifying pilots for flight, the design and development of the aircraft itself, and research into aircraft characteristics and control handling qualities. Some simulations are based on previously recorded flights which are virtually recreated for a pilot.

Current flight simulation playback requires expensive, full-sized, physical re-creations of aircraft cockpits for physical and simulation replay. Pilot or instructor actions are sometimes recorded in the simulators, but the body movements of the pilot are not recorded and cannot be replayed in a fully immersive environment. Thus a user later sees the effect of the recorded actions, but not the actions themselves. For instance, there may be buttons that are reachable by both hands of the pilot, but best practices dictate that they should usually be controlled with the left hand. If the pilot uses their right hand, either because they do it incorrectly, or because the current flight maneuver requires the pilot to switch hands, conventional simulation systems would capture and play it back incorrectly, instead of recording the actual pilot body state and actions.

Additionally, while the current expensive, full-sized simulators can recreate pilot behavior to a limited degree, they do not provide for the playback of cockpit control inputs or recorded flight simulations. They also have no ability to disseminate flight training which includes visualization of the actual body state of the instructor during aircraft operation.

To improve over these limitations of conventional simulation system, the present disclosure is directed to a flight simulation system which provides recording and playback of simulated flights conducted in a Flight Simulation Training Device (FSTD), with recording and playback of simulator data including flight visuals, cockpit control inputs, cockpit sound and pilot voice recordings, pilot eye gaze, and pilot body pose. The recording and playback of simulator data may be coupled with a method of disseminating and validating the correctness and effectiveness of such recordings. This allows for a validated demonstration (demo) of a flight maneuver or other flight instruction by an instructor user to be provided to a trainee user within a virtual environment.

In one embodiment, a virtual reality flight simulation system with a realistic instructor demonstration includes flight simulation data generated by an instructor user in an FSTD which is recorded to produce a simulated flight demonstration. The flight simulation data includes flight visual re-creation data to recreate flight visuals, physical control element states, instructor user body states, and auditory data. The simulated flight demonstration is validated for correctness. The validated simulated flight demonstration is played to at least one trainee user in a virtual environment of the FSTD. The virtual environment is viewable by the trainee user on at least one visual interface. The validated simulated flight demonstration includes time-synchronized playback of the recorded flight simulation data generated by the instructor user.

In one aspect of this method, the virtual environment includes a virtual reality (VR), augmented reality (AR), or mixed reality (MR) visualization of validated simulated flight demonstration.

In another aspect of this method, the simulated flight demonstration is rendered at least once, whereby the simulated slight demonstration provides free head movement in the virtual environment.

In another aspect of this method, rendering the simulated flight demonstration includes depicting object positional data within the virtual environment.

In another aspect of this method, an image of the instructor user body is depicted in the virtual environment.

In another aspect of this method, validating the simulated fight for demonstration for correctness comprises: extracting required data with a required data parser; extracting replay data with a replay data parser; determining overlap data between the extracted required data and the extracted replay data; and comparing the overlap data with the extracted replay using a validator to thereby return a validated flight recording.

In another aspect of this method, at least a portion of the flight visual re-creation data is mixed with a subsequent recording to provide the simulated flight demonstration with layered data.

In one embodiment, a method of virtual reality flight simulation having a realistic instructor demonstration includes recording flight simulation data to produce a simulated flight demonstration, the flight simulation data including first visual re-creation data for recreating flight visuals, physical control element states, instructor user body states, and auditory data; validating the simulated flight demonstration for correctness; and playing the validated simulated flight demonstration to at least one trainee user in a virtual environment of the FSTD, the virtual environment being viewable by the trainee user on at least one visual interface, wherein the validated simulated flight demonstration includes time-synchronized playback of the recorded flight simulation data.

In one aspect of this method, the flight simulation data is generated by at least one of: a instructor user in the FSTD; a non-simulated flight in an aircraft; or the trainee user in a previous flight simulation.

In another aspect of this method, when the flight simulation data is generated from the non-simulated flight in the aircraft at least a portion of the flight visual-recreation data is derived from at least one of: a sensor carried on the aircraft; or aircraft data from an aircraft bus.

In another aspect of this method, the virtual environment includes a virtual reality (VR), mixed reality (MR) or augmented reality (AR) visualization of validated simulated flight demonstration.

In another aspect of this method, the simulated flight demonstration is rendered at least once, whereby the simulated flight demonstration provides free head movement in the virtual environment.

In another aspect of this method, rendering the simulated flight demonstration further comprises depicting object positional data within the virtual environment.

In another aspect of this method, validating the simulated flight demonstration for correctness includes: extracting required data with a required data parser; extracting replay data with a replay data parser; determining overlap data between the extracted required data and the extracted replay data; and comparing the overlap data with the extracted replay using a validator to thereby return a validated flight recording. In another aspect of this method, validating the simulated flight demonstration for correctness comprises: extracting required data with a required data parser; extracting replay data with a replay data parser; determining overlap data between the extracted required data and the extracted replay data; and comparing the overlap data with the extracted replay using a validator to thereby return a validated flight recording. In yet another aspect of this method, at least a portion of the flight visual re-creation data is mixed with a subsequent recording to provide the simulated flight demonstration with layered data.

In one embodiment, a method of virtual reality flight simulation having recording and a realistic playback capabilities includes: recording flight simulation data generated by a trainee student in a FSTD during a flight training session, the flight simulation data including flight visual re-creation data for recreating flight visuals, physical control element states, trainee user body states, and auditory data; and playing a recorded simulation formed from the recorded flight simulation data to the trainee user in a virtual environment of the FSTD, the virtual environment being viewable by the trainee user on at least one visual interface, wherein the recorded simulation includes time-synchronized playback of the recorded flight simulation data generated by the trainee user.

Another aspect of this method further comprises generating at least one additional recording; combining the at least one additional recording with the recorded flight simulation data; and playing the combined simulated flight demonstration with the at least one additional recording.

In another aspect of this method, the combined simulated flight demonstration with the at least one additional recording depicts and avatar of at least one of the trainee user or an instructor user in the virtual environment.

In another aspect of this method, at least one of the trainee user of the instructor user is depicted partially transparent in the virtual environment.

In another embodiment, instead of recording a simulated flight demonstration with an instructor user, a flight training session of a trainee user can be recorded. This trainee user recording can include the same flight simulation data as discussed previously, including the flight visual re-creation data required to re-create the simulation. This may include flight visuals, physical control element states, student body states, and auditory data (e.g., student and instructor voice). This recording can be made without necessarily validating and/or deploying the flight simulation. For instance, the recording can be played back to the student pilot for debriefing after a training session, e.g. analyze an error during a maneuver or identify potential for improvement. The recording can also be played back to the instructor for debriefing, helping to identify mistakes.

Furthermore, this recording of the trainee user can also be stored on a network storage device making the recording available to the trainee user and people he or she may decide to share it with, allowing playback of the recording when the trainee user does not have access to the simulator, e.g. at home with a different flight recording playback capable system, or when the trainee user visits another simulator supporting the flight recording playback. The trainee user flight recording data can also be further be augmented with annotations after the session is complete, e.g. with annotations marking segments of the session where a mistake happened, or by including comments on how to improve in a certain situation. These annotations further help the trainee user to find the relevant segments of the session.

Further areas of applicability will become apparent from the description provided herein. The description and specific examples in this summary are intended for purposes of illustration only and are not intended to limit the scope of the present disclosure.

### Brief Description of the Drawings

Further features and advantages of the disclosure will be seen in the following detailed description, taken in conjunction with the accompanying drawings. The drawings described herein are for illustrative purposes only of selected embodiments and not all possible implementations and are not intended to limit the scope of the present disclosure.

In the drawings:
FIG. 1 is a diagrammatic illustration of a flight simulation system with recording and playback capabilities, in accordance with the present disclosure;
FIG. 2 is a diagrammatic illustration of a flowchart used with the flight simulation system with recording and playback capabilities, in accordance with the present disclosure;
FIG. 3 is a flow diagram illustrating a process of using a recording for training in the flight simulation system with recording and playback capabilities, in accordance with the present disclosure;
FIG. 4 is a flow diagram illustrating pilot training in the flight simulation system with recording and playback capabilities, in accordance with the present disclosure;
FIG. 5 is a flow diagram illustrating a method of validating recorded flight simulation in the flight simulation system with recording and playback capabilities, in accordance with the present disclosure;
FIG. 6 is a flow diagram illustrating the recording and playback of a student pilot session recording, in accordance with the present disclosure; and
FIG. 7 is a flow diagram illustrating the concurrent replay and recording capabilities and subsequent compositing of multiple recordings, in accordance with the present disclosure.

### Detailed Description

Example embodiments will now be described more fully with reference to the accompanying drawings. Example embodiments are provided so that this disclosure will be thorough and will fully convey the scope to those who are skilled in the art. Numerous specific details are set forth such as examples of specific components, devices, and methods to provide a thorough understanding of embodiments of the present disclosure. It will be apparent to those skilled in the art that specific details need not be employed, that example embodiments may be embodied in many different forms, and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having" are inclusive and therefore specify the presence of stated features, integers, steps, operations, elements, components, and/or groups, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers, and/or sections, these elements, components, regions, layers, and/or sections should not be limited by these terms. These terms may be only used to distinguish one element, component, region, layer or section from another element, component, region, layer, or section. Terms such as "first," "second," and other numerical terms when used herein do not imply a sequence or order unless clearly indicated by the context. Thus, a first element, component, region, layer, or section discussed below could be termed a second element, component, region, layer, or section without departing from the teachings of the example embodiments.

Spatially relative terms, such as "inner," "outer," "beneath," "below," "lower," "above," "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

Additionally, the term "aircraft flight" and "aircraft operation" may be used interchangeably throughout the disclosure.

To improve over the shortcomings in the industry, the present disclosure is directed to a flight simulation system which provides capture or recording of flight visual re-creation data, which can be used to perform playback of simulated flights conducted in an FSTD, where the playback simulations include flight visuals, cockpit control inputs, cockpit sound and pilot voice recordings, pilot eye gaze, pilot body pose, and any other aspect of the flight simulation. The recording and playback of simulator data may be coupled with a method of disseminating and validating the correctness and effectiveness of such recordings. This allows for a validated demonstration of a flight maneuver or other flight instruction by a flight instructor to be provided to a trainee pilot within a virtual environment.

In accordance with this disclosure, the term "flight" is understood to mean any operation of an aircraft, including use in aerial flight, use with ground operations including taxiing or on-ground maneuvers, or any combined use thereof, e.g., landing, takeoff, touchdowns, or others.

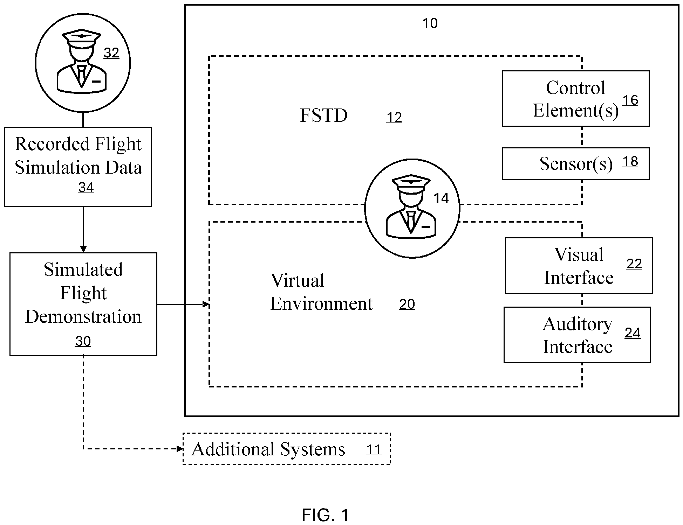

FIG. 1 is a diagrammatic illustration of a flight simulation system 10 with recording and playback capabilities, in accordance with the present disclosure. As shown in FIG. 1, the flight simulation system 10 has FSTD 12 which is a physical simulation environment providing flight simulation to a pilot 14, such as a trainee pilot who is receiving instruction in flight maneuvers or other aircraft operation techniques. The FSTD 12 may be any physical flight simulator or portion thereof and may include physical control element(s) 16 which simulate or recreate typical control elements in aircraft. Aircraft may include, e.g., helicopters, airplanes, gyrocopters, and powered lift craft; moreover those skilled in the art will recognize that the simulation system of the present invention is applicable to spacecraft, boats, and racecars. Any number of sensors 18, including visual, photographic, electrotechnical, auditory, or any other type of sensor, may be included to detect and record the pilot's actions and body movements. The flight simulation system 10 has a virtual environment 20 which is viewable by the pilot 14 on at least one visual interface 22, such as a VR system, monitors, or another visual display device. An auditory interface 24 may also be included to provide the pilot 14 with audio corresponding to the virtual environment 20.

The flight simulation system 10 receives an input of a simulated flight demonstration 30 to provide the pilot 14 an instruction within the flight simulation system 10. The simulated flight demonstration 30 may be produced from recording flight simulation data 34 generated by a flight instructor 32 over a period of time, such as during a particular aircraft operation training exercise or aircraft operation maneuver. In one example, the simulated flight demonstration 30 may be generated from an instructor, such as an aircraft Original Equipment Manufacturer's (OEM) reference pilot, using the FSTD or a real aircraft equipped with the needed data acquisition system to fly some maneuvers for use with future demonstration purposes, where the maneuvers are recorded, such that there is a recording of the instructor's body movements, verbal explanations, and control movements. When a real aircraft is used, e.g., a non-simulated operation or flight in the aircraft, the aircraft will include the necessary sensors required for capturing relevant data. For instance, for GPS or inertial measurement unit systems ('IMU') data, as well as position and attitude of the aircraft, sensors which exist on most modern aircraft may be used to provide the corresponding data. Pose tracking data can be achieved with the installation of cameras, and cameras can also be used to identify knob positions or instrument settings. The image data captured by the cameras can be processed with AI or similar techniques, or the data can be achieved directly from the aircraft bus. CLS data can also be achieved by adding sensors to controls of the aircraft, or by retrieving the controls data directly from the aircraft bus.

The flight simulation data 34 within the simulated flight demonstration 30 may be derived from a previous exercise within an FSTD, and include any data capable of being recorded within the simulation. In a preferred example, the flight simulation data 34 includes all flight visual re-creation data, which is characterized as all underlying simulation data which is required, or can be used, to recreate or render the simulated flight exactly or to a high degree sufficient to provide a flight simulation which closely mirrors the simulated flight demonstration 30 performed by the instructor pilot 32. The flight visual re-creation data may be derived from a variety of sources including from underlying data in the simulation environment or from simulation devices or systems used within the simulation environment.

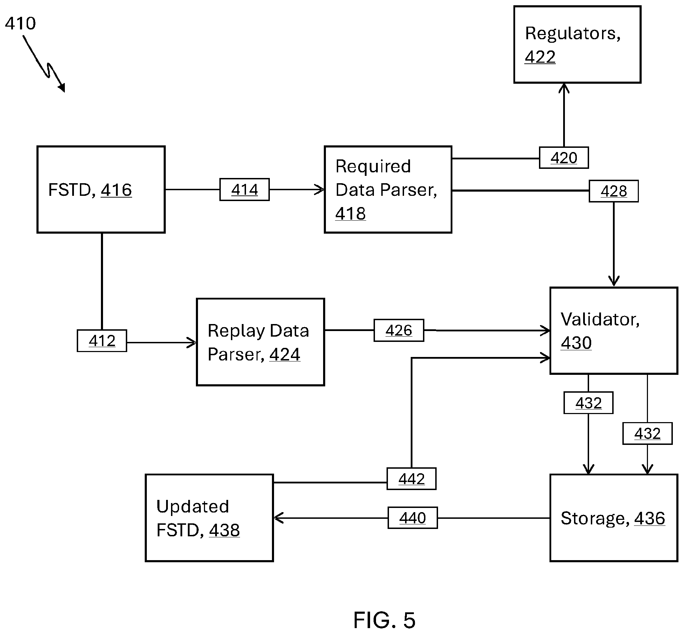

Accordingly, the flight simulation data 34 includes the flight visual re-creation data, which itself may include flight visuals, such as the visual images displayed in the FSTD, physical control element states of control elements, flight instructor body states, including the body position, gaze, pointing, or other body data of the flight instructor, and auditory data, such as speech, alarms, or auditory signals. The simulated flight demonstration 30 may be validated, as discussed relative to FIG. 5.

The flight simulation system 10 may be capable of providing the simulated flight demonstration 30 which includes accurate re-creations of the flight visuals based on recordings of the underlying states of the simulation, or by using recordings of the flight visuals themselves, or any combination thereof. Recreating the flight visuals from the recorded underlying data of the simulation allows for the flight visuals to be replayed by rendering the flight visuals from scratch. This ability enables the consumer of the replay to experience a broad simulation which can provide better training to pilots 14. For instance, the pilot 14 may be capable of looking around to see different parts of the simulation than what was originally shown to the instructor pilot 32 who created the simulated flight demonstration 30. Since the head position and rotation of the instructor pilot 32 is also recorded, it is still possible to incorporate this information in the replay which is useful if the view direction of the recording plays a role in the training. In that case, the view direction can be hinted to the pilot 14 viewing the replay by visually or otherwise highlighting the view of the recorded session. For example, this may be achieved by rendering the view of the recorded session in color, and everything outside of the recorded session in black and white, or darkening.

In one example, the flight visual re-creation data can include data rendered by an image generator of the simulation environment. In this case, the scene within the simulation environment may be rendered one or more times, including originally and any additional or successive times, during playback using the underlying data, which allows for the simulation to include free head movement in the virtual environment during the simulation session. The simulation with free head movement ensures that the simulation depicts the virtual environment in any viewing direction, irrespective of a viewing direction of the simulated flight demonstration. This data may include object positional data, such as object positions or other information needed to reproduce the three-dimensional (3D) scene, and also video streams used to visualize avionic components or other devices used by the pilot 14, *e.g.,* a tablet computer. In this case, it is also possible to post-process the data to depict the pilot's 14 body in the 3D scene while a depiction of the instructor pilot's 32 body is rendered semitransparent and/or on the copilot's seat. The eye tracking data from the pilot 14 can also be visualized during playback. In one of many alternatives, the flight visuals themselves can also be recorded as a video, or the aircraft simulation data can be recorded and everything can be reconstructed by a closed loop system which tracks the originally-recorded data.

In one example, the simulated flight demonstration 30 can be derived by re-recording or re-creating any parts of the original flight visual re-creation data where those parts of the data have been replaced by a second or subsequent recording or re-creation, and mixing to output the desired simulated flight demonstration 30 to provide a simulated flight demonstration with layered data. The layered data may include any combination of all or a portion of the original flight visual re-creation data, and any recordings layered on this original data. Mixing may include recording the full simulated flight, then recording it again while adding a voice track and depicting the instructor on the copilot seat. Even if on hardware, the user can be depicted sitting on the pilot's seat, and can be shown the copilot's view so user can act as if he or she were the copilot. The result is having the pilot 14, copilot, and two voice tracks as a recording, where one can select which to use. The simulation may be played where the copilot is fully shown, the instructor pilot 32 is shown semitransparent, and the live pose of the pilot 14 is shown in solid or non-transparent. During play, it may be possible to hide any of the features or portions thereof.

It is noted that each aspect of a flight simulation demonstration can be enabled or disabled during playback to adjust the simulation as desired. For instance, it may be possible to change some aspects of the visual scene to enhance the simulation. This may include, for example, depicting a person in the copilot seat during the simulation even if the seat was unoccupied originally.

The flight simulation system 10 for the pilot 14 receives the simulated flight demonstration 30 from the flight instructor 32, and uses time-synchronized playback of the recorded flight simulation data 34 to provide pilot 14 with flight instruction. For example, the simulated flight demonstration 30 may be played (visually, auditorily, and haptically) within the virtual environment 20 and the physical FSTD 12 of system 10. For instance, the virtual environment 20 can include a virtual reality (VR) or augmented reality (AR) visualization of simulated flight demonstration displayed on the visual interface 22, while auditory data is played through the auditory interface 24, and haptic or sensory data is output to the physical control elements 16 of the FSTD 12. This results in the pilot 14 experiencing an immersive simulation of the demonstration by the flight instructor 32 which closely matches in-person instruction typical in flight training. The instruction from the simulated flight demonstration 30 may also be provided to additional system 11 with other pilots, such that the same, validated instruction from the flight instructor 32 can be provided to numerous trainee pilots.

The FSTD 12 may replicate the control element(s) 16 in a flight cockpit. This physical flight simulator may be built to any specification or to match any type of aircraft cockpit. Each control element may be motorized using the control loading system (CLS) such that both a pilot in the simulator and a playback system can actuate the control element(s) 16, which allows the control element(s) 16 to be actuated both from within the FSTD 12 by the pilot 14 and by data from the simulated flight demonstration 30. This may allow the pilot 14 to both actuate the control element(s) 16 and receive haptic feedback from the control element(s) 16 from the simulated flight demonstration 30. The pilot 14 uses the visual interface 22, such as a VR/AR headset, to visualize the flight environment in the simulation for the pilot. The sensor(s) 18 may include, for instance, a pose tracking system which is implemented throughout the simulator to record the pilot's entire body state, including but not limited to feet, hands, visual expressions and head. This data is collected to generate virtual simulations of the aircraft operation.

By incorporating the simulated flight demonstration 30, the system 10 can effectively simulate a demonstration ("demo") of a flight maneuver by a flight instructor 32 virtually present with the trainee pilot 14. This replicates a key technique used in conventional flight instruction where an instructor would sit side by side with a trainee pilot, such that the trainee pilot could view and hear all actions taken by the instructor during the maneuver and feel the instructor movements on the linked flight controls. Additionally, this ability for the instructor to be virtually present helps meet the demands of instructor availability with pilot training, whereby the instructor avatar is able to provide high quality training to trainee pilots. A recording and playback of a simulated flight by a high-quality flight instructor, such as a chief pilot instructor or another instructor with extensive experience, can serve as a demonstration lesson for any pilot 14 with access to an FSTD 12.

The use of the simulated flight demonstration 30 with the system 10 provides improvements to slight simulation devices and pilot training, since there are currently no virtual devices which recreate physical cues and the physical positions of cockpit control inputs during the playback of previous simulated flights. Additionally, the ability of instruction devices to provide accurate visualization of recorded body pose during the simulated playback of previous instruction flights is an improvement over conventional pilot training, which often relies on either in-person training with an instructor or virtual instruction without an instructor presence in the simulation visualization.

This simulated flight demonstration 30 could also be consumed by pilots without access to the FSTD, such as where the data from the simulated flight demonstration 30 is replicated into other forms of teaching material. A high-quality recording of a aircraft operation maneuver could serve as the standardized training reference for every pilot 14 on that aircraft operation maneuver. A collection of such maneuvers could become a training course that standardizes the training every pilot 14 receives for a particular aircraft. A process for dissemination gives all pilots 14 the best quality content for training, and provides data for the comparison between different aircraft operation training content.

Playback of a simulated flight in an FSTD 12, including of cockpit sounds would allow for immersive pilot 14 training with accurate and realistic physical cues. Playback of instructor pilot 32 voice can allow instructors to provide training information throughout a recording, and simulate real interactions between pilots 14 in the cockpit. Additionally, the visualization of an instructor pilot's 32 body pose in playback of a flight simulation provides a detailed reference for training pilots 14 to operate in a cockpit (e.g. flipping a switch with the left vs. right hand).

It is noted that the simulated flight demonstration 30 may be generated from instructors 32 who are highly experienced pilots. Their instruction and aircraft operation maneuvers can be recorded and stored as an EBT curriculum of maneuvers, so that many student or trainee pilots 14 can follow a standardized curriculum. In some situations, it may be possible to include synthetic EBT maneuvers which can be generated using reinforcement learning (RL). An RL system could run many (e.g. over a million) simulations of a certain maneuver or situation and find the best maneuvers for the goals of a) efficient learning and/or b) safety of flight post-learning. An RL system could also use many flight recordings by experienced pilots as a dataset and use curriculum learning to improve its process of finding the best maneuvers.

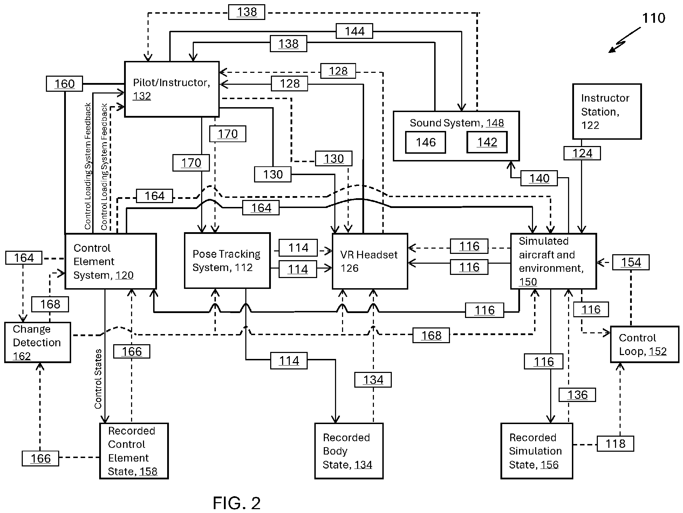

In further detail, FIG. 2 is a diagrammatic illustration of a flowchart 110 used with the flight simulation system 10 of FIG. 1 with recording and playback capabilities, in accordance with the present disclosure. With reference to both FIGS. 1-2, when the flight simulator is in flight recording mode, the position of each control element 16 is recorded such that its position at every timestep of the aircraft operation can be recreated. For example, an on/off switch may record the times at which it changes state, while a throttle will record its state at every timestep. The pose tracking system 112 within the sensors 18 records the pilot's body state 114 at every timestep. The aircraft state in simulation 116 will be recorded either at every timestep or at an interval of time larger than the timestep, which are known as a "snapshot 118." These snapshots 118 of the recorded flight at certain points in time help ensure that deviations from the recorded flight are identified and corrected for, in contrast to replays of the flight using only its initial conditions which may lead to deviations from the recorded flight.

The aircraft state in simulation 116 is also recorded in such a way that it is synchronous in time and in action with the control element and pose tracking systems 120, 112. For example, when a switch is flipped on the control element system, the simulation reflects that change at the same timestep, such that the action is synchronized in time, and dependent in that a change to the physical cockpit state is replicated in the simulation environment 150 (e.g., visually). Instructor inputs from an instructor station 122 that cause aircraft and environment changes 124 are also recorded in the simulation state 116. The initial conditions of the simulation, including aircraft simulation state 116 and environmental variables, such as weather or other flight traffic, are also recorded. The visual interface 22, e.g., the VR/AR headset 126, generates, on a visual display 128, a visualization of the aircraft operation and its surrounding environment and the pilot's current body state 114 based on the pilot's head position 130, the pilot's pose tracking data 170, such as the interaction with cockpit controls, or arm movements point to relevant information in the flight simulation, and the simulated aircraft state 116 at each timestep, but the visualization is not recorded. In one example, the pilot's 132 eye gaze may be captured and recorded by a camera in the VR/AR headset 126 worn by the pilot. In another example, the eye gaze may be captured by the direction the VR/AR headset 126 is pointed.

When the flight simulation system 10 is in flight playback mode, the recorded initial conditions of the aircraft operation are used as the initial conditions for the simulation 150. A control element system 120 actuates the control elements 16 using the CLS according to the recorded states, which (through synchronous recording) is also reflected in the aircraft state in simulation 116. Instructor inputs are injected into the simulation at the time they occurred in the recording. At each timestep, the VR/AR headset 126 generates, on a visual display 128, a visualization of the aircraft operation and its surrounding environment, the current pilot body state 114, and the recorded body state 134 including eye gaze (e.g., as a ghost replay for body position and a visual indicator for gaze, such as a small red dot) based on the pilot's head position 130 and the recorded aircraft and environment state 136. This recorded body state 134may be of an instructor sitting where the pilot 132 is sitting. In another example, the recorded body state may be that of an instructor sitting in the other seat of a two-seat cockpit.

Additionally, pilot voice recordings 138 and cockpit sounds 140 may be played back to the pilot 132 through speakers 142, which may include voiceover 144 provided by the instructor pilot. This auditory data may be captured with one or more microphones 146 within a sound system 148 and output through speakers directed to the trainee pilot 132. Recorded and/or synthesized audio from the instructor pilot may also be provided to the trainee pilot 132, which may include speech or other audio data from the simulated aircraft and environment 150. For instance, this may include pilot 132 voices during the aircraft operation (e.g. instructor comments during aircraft operation). In another example, this audio data may include cockpit noises 140 generated by the aircraft state in simulation 116 (e.g. engine hum, switches, voice information, or air traffic radio). Providing recorded pilot voiceover 144 during the playback of previous simulated flights can help ensure that the trainee pilot 132 can receive verbal instruction and commentary paired with an existing simulation, which allows for a more dynamic training environment for the trainee pilot 132.

If the aircraft state 116 was recorded at an interval larger than the timestep (in the form of simulation snapshots 118), the simulation state 116 of the aircraft and environment may drift from the recorded state 156. A control loop 152 will compare the simulation state 116 to the recorded snapshot states 118, by propagating the simulation state 116 to the same timestep as a snapshot state 118 and measuring the difference. It will then use the difference to calculate simulation adjustments 154 such that the simulation in replay follows the recorded simulation state 156 as closely as possible. The difference may be kept small enough such that there is no noticeable difference to the pilot 132 between the state of the simulation 116 and the recorded body states 134 and recorded control element states 158. Special importance may be given to the synchronization of states around the time a control action 160 is taken.

A change detection 162 system may be used to detect pilot 132 deviation from the recording in replay by measuring the difference in the control element positions 164 and the recorded positions 166. If the difference exceeds a certain amount, the system 162 signals the control elements 16, the pose tracking 112, and the simulation to change a live signal 168 of the simulation and act in flight recording mode. In one example involving a strict replay mode, the simulation may continue to replay the recorded flight and ignore differences in the control element positions from the recorded positions.

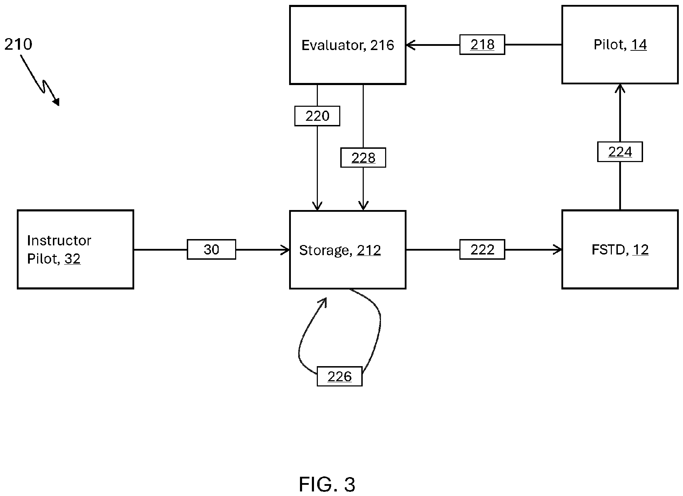

FIG. 3 is a flow diagram 210 illustrating a process of using a recording for training in the flight simulation system 10 with recording and playback capabilities, in accordance with the present disclosure. With reference to FIGS. 1 and 3, when the instructor pilot 32 generates a recording of a simulated flight, it may be stored in a storage medium 212 as the simulated flight demonstration 30, as discussed relative to FIG. 1. The storage medium 212 may be an electronic storage device, such as a server, a cloud-implemented storage device, a local memory of the FSTD 12, or another device. When training is required or desired, a trainee pilot 14 may request 214 the flight recording from an evaluator 216, which is typically a person or entity authorized to conduct formal assessments of a trainee's 14 performance. The request 218 to the evaluator 216 may ensure the accuracy of the recording 30. For instance, the evaluator 216 could be the chief flight instructor for the OEM of the aircraft, such that he or she has full knowledge and training with the aircraft. Once accuracy of the simulated flight demonstration 30 is verified, the evaluator 216 may give approval 220 to the storage device 212 to deploy 222 the recording onto the system 10, such that the physical and virtual playback 224 of the simulated flight demonstration 30 are provided to the trainee pilot 14 via the FSTD 12 and virtual environment 20. The storage device 212 may perform validation 226 of the flight recording 30 when the recording is first created, and based on commands 228 from the evaluator 216.

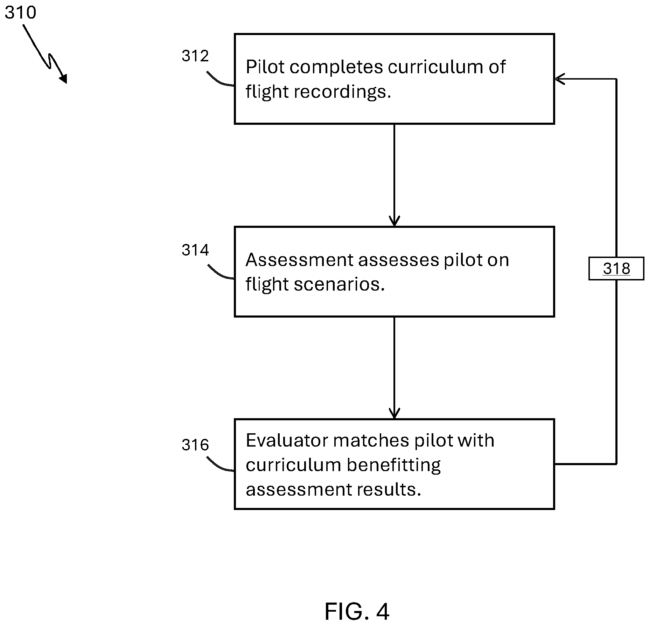

FIG. 4 is a flow diagram 310 illustrating pilot training in the flight simulation system 10 with recording and playback capabilities, in accordance with the present disclosure. At step 312, the pilot completes a curriculum of simulated flight demonstrations having flight recordings demonstrating relevant maneuvers for the aircraft the pilot is being trained on. At step 314, an assessment is conducted using the FSTD to measure the pilot's flying behavior and skill level. Based on data gathered by the assessment mechanism, at step 316, the evaluator may have the pilot conduct the simulation again, or match the pilot with a new curriculum of flight recordings to maximize pilot training effectiveness. It is noted the assessment mechanism may include comparisons between various factors which indicate the pilot's proficiency or skill, such as, for instance, trajectory a pilot flew vs. the reference trajectory from an instructor, the reaction time of the pilot to a cockpit warning injected during simulation, or other factors. It is also noted that the curriculum of flight recordings may be tailored for one or more of the pilot's skill level, learning style, or similarities with other pilots in flying style.

A validation process 318 may be used to ensure that recorded simulation data is accurate for playback, even given hardware and software updates to an FSTD. Validation for correctness of physically realistic and accurate flight training content before widespread dissemination including for updated FSTD versions is an important step since it can ensure that pilot training is accurate and complete across different FTSDs, and therefore, capable of providing the highest quality training to pilots.

FIG. 5 is a flow diagram 410 illustrating a method of validating recorded flight simulation in the flight simulation system 10 with recording and playback capabilities, in accordance with the present disclosure. As shown, this validation method includes generating simulated flight data 412, which includes all data 412, 414 from the FSTD 416. The data required for regulation 414 (`required data 414') may be sent to a required data parser 418 that extracts required data 420 for regulatory purposes. This extracted required data 420 may be analyzed or passed to regulators 422 to be analyzed. All data 412 is sent to a replay data parser 424, which extracts the data necessary for replay of the simulated flight 426 (`replay data 426'). The replay data 426 and required flight data 420 may have overlap in data required for both. Accordingly, the required data parser 418 also returns data that is required both for regulation and for replay (`required replay data 428'). The replay data 426 and required replay data 428 may then be compared and validated for correctness using the validator 430, which may return a validated flight recording 432 and a validation checksum 434 confirming validity to the storage device 436.

On subsequent replay, the hardware and/or software of the FSTD 416 may have been updated 438. When this occurs, the storage device 436 having the simulated flight demonstration sends the replayed flight commands 440 to the FSTD 438, which uses these commands 440 to generate replay flight data 442. This data 442 may include, among other things, a simulated flight trajectory. The recording is validated for use on an updated FSTD 438 by sending the replay flight data 442 for validation to be compared against the original replay data 426. Updates can be achieved manually or automatically, include hardware or software differences, and may include validation or re-validation by a certificating authority or a delegate thereof.

There is the option for the same flight lesson to be demonstrated by a different instructor, such that a particular flight instruction or maneuver can be provided from different pedagogical styles. Initially, the progress and training efficiency of trainee pilots may be measured or estimated using EBT. After enough samples of trainee pilots, it may be possible to achieve enough of a predictor to match new trainees to a certain instructor based on their personal training, learning profile, or preference.

It is noted that the system 10 may be further improved through the development and use of a control system to handle the drift of a flight simulation trying to follow a recorded simulation, while also maintaining synchronicity with control element and pilot body states. Generally, drift between the flight simulation and a recorded simulation is largely caused by deviations in time. If the time between two physics calculations in the recording was e.g., 10.000 ms and, in the playback, 10.001 ms, there is already a tiny deviation between the recorded flight path and the played back one. This tiny error can easily propagate, which can lead to a big deviation after a few seconds or minutes.

The system 10 may be configured to account for and correct drift by using a control loop. Drift can be handled by recording checkpoints of the aircraft state and treating that as a trajectory to be followed. The control loop will compare the simulation state to the recorded snapshot states by propagating the simulation state to the same timestep as a snapshot state and measuring the difference. It will then use the difference to calculate simulation adjustments such that the simulation in replay follows the recorded simulation state as closely as possible. These simulation adjustments could be calculated through solving this as a control problem of trajectory following, enabled by small shifts in the simulation aircraft state and control element state not perceivable to the pilot. There may be an issue that the pilot pose tracking playback may not be synchronized with the simulation. However, if the desired trajectory is matched closely, then the error should not be perceivable to the pilot. Special importance is given to the synchronization of states around the time a control action is taken.

In another embodiment, instead of recording a simulated flight demonstration with an instructor pilot, a flight training session of a trainee pilot can be recorded. This trainee pilot recording can include the same flight simulation data as discussed previously, including the flight visual re-creation data required to re-create the simulation. This may include flight visuals, physical control element states, student body states, and auditory data (e.g., student and instructor voice). This recording can be made without necessarily validating and/or deploying the flight simulation. For instance, the recording can be played back to the student pilot for debriefing after a training session, e.g. analyze an error during a maneuver or identify potential for improvement. The recording can also be played back to the instructor for debriefing, helping to identify mistakes.

Furthermore, this recording of the trainee pilot can also be stored on a network storage device making the recording available to the trainee pilot and people he or she may decide to share it with, allowing playback of the recording when the trainee pilot does not have access to the simulator, e.g. at home with a different flight recording playback capable system, or when the trainee pilot visits another simulator supporting the flight recording playback. The trainee pilot flight recording data can also be further be augmented with annotations after the session is complete, e.g. with annotations marking segments of the session where a mistake happened, or by including comments on how to improve in a certain situation. These annotations further help the trainee pilot to find the relevant segments of the session.

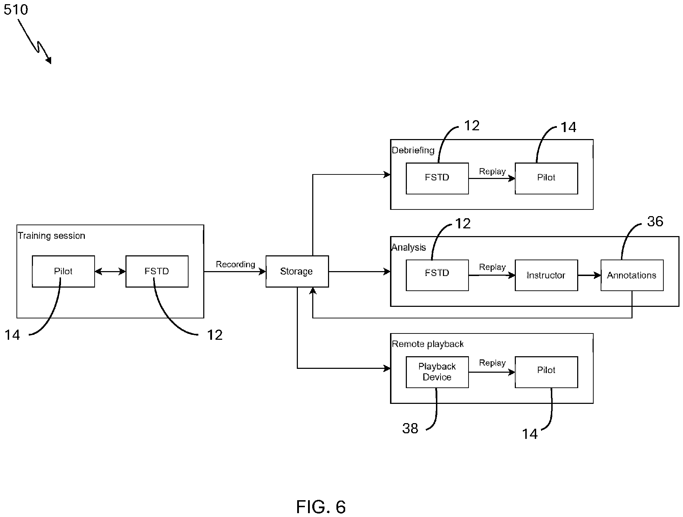

In greater detail, FIG. 6 is a flow diagram 510 illustrating a process of using a recording for training in the flight simulation system 10 with recording and playback capabilities, in accordance with the present disclosure. Unlike the system 10 described relative to FIG. 1, where the instructor pilot 32 generates the recorded flight simulation data 34, the system of FIG. 6 generates the recorded flight simulation data by the trainee pilot 14 during a training session on the FSTD 12. The training session is recorded and stored on a storage device, e.g. local storage or cloud storage. This recording can be played back to the trainee pilot 14 after the training session for debriefing, allowing the instructor, for example, to highlight critical segments of the session. This playback can also be played back to the trainee pilot 14 before a next training session to remind them of a previous mistake. The same recording can also be consumed by the instructor pilot 32 to help them identify areas of improvement of a pilot student 14. Furthermore, the instructor is able to add additional material to the recording in the form of layered data, which may include an additional recording or any other additional information pertinent to the recording. For example, this additional layer may include annotations 36 to the recording helping the instructor and the trainee pilot 14 find relevant segments of the recording and add comments to them. Additional recordings or layered data, such as annotations 36, can be in various forms, for example a voice recording, text comment, image, or a video recording.

Additionally, the recording can be consumed by the trainee pilot 14 or any person appointed by them on a device different from the FSTD 12 where the recording took place. This playback device 38 can be a different FSTD 12 compatible with the recording, or a system with limited playback capabilities, e.g. lacking physical controls, which can be a 2D viewing device like a display connected to a personal computer, a mobile device, or a VR or MR headset connected to a personal computer or acting on its own (standalone headset).

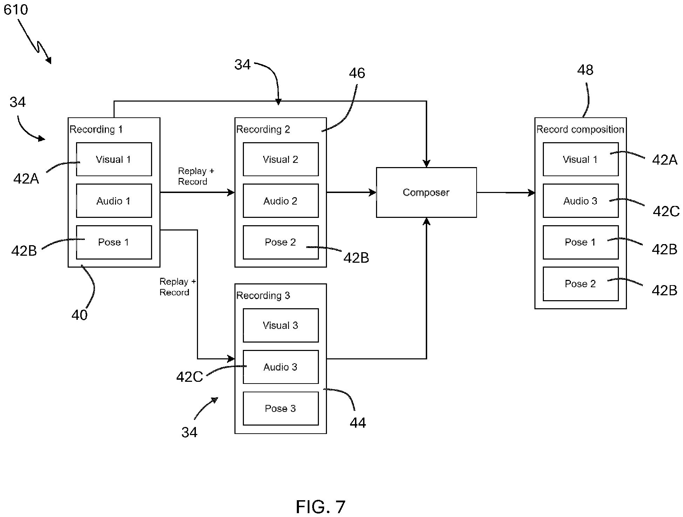

FIG. 7 is a flow diagram 610 illustrating a process of using a recording for training in the flight simulation system 10 with recording and playback capabilities, in accordance with the present disclosure. In addition to previously stated methods, an initial flight session is recorded to generate a recorded simulation 40 formed from the recorded flight simulation data, e.g. the recorded flight simulation data 32 of FIG. 1. For instance, the recorded simulation 40 may be the simulated flight demonstration 30, as depicted in FIG. 1, or it may include another type of recording of the recorded flight simulation data, e.g., a video recording, an audio recording, or another recording in another format. The recorded simulation may include various data elements 42A-42C, as previously discussed, such as visual, audio, or pose elements. Additional recorded simulations 44, 46 are also provided, each with their own data elements 42B, 42C, respectively.

As shown in FIG. 7, the selected elements 42A, e.g. pose or auditory data, of the original recorded simulation 40 of flight simulation data 34 is played back during a second flight session corresponding to additional recorded simulation 44, or more flight sessions corresponding to additional recorded simulation 46, of which the flight simulation data is also recorded. The recorded flight simulation data 34 of each recorded flight session, 40, 44, 46 can then be combined into a composite recording 48 of a combination of selected elements 42A-42Cof the selected recordings 40, 44, 46. For instance, FIG. 7 shows one possible composition of three recordings 40, 44, 46, using the visuals elements 42A of the original or first recording 40, the auditory data element 42C of the third recording 46, and the pose data elements 42A, 42B of the original and second recording, 40, 44.

Multiple poses can be rendered either by setting one or both avatars to be partially transparent, or by having one of the avatars sitting in the copilot seat and the other one in the pilot seat. In cases where more than one auditory data source is selected, the aircraft and environmental noises are only taken from one source, while the pilot and/or instructor voices are kept from all sources.

It should be noted that any process descriptions or blocks in flow charts should be understood as representing modules, segments, portions of code, or steps that include one or more instructions for implementing specific logical functions in the process, and alternate implementations are included within the scope of the present disclosure in which functions may be executed out of order from that shown or discussed, including substantially concurrently or in reverse order, depending on the functionality involved, as would be understood by those reasonably skilled in the art of the present disclosure.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure. Various changes and advantages may be made in the above disclosure without departing from the spirit and scope thereof.

| | | | |
|---|---|---|---|
| List of References | | 122 | instructor station |
| 10 | flight simulation system | 124 | aircraft and environment changes |
| 11 | additional system | 126 | VR/AR headset |
| 12 | flight simulation training device (FSTD) | 128 | visual display |
| | | 130 | pilot head position |
| 14 | pilot | 132 | pilot/trainee pilot |
| 16 | control element | 134 | recorded body state |
| 18 | sensors | 136 | recorded aircraft and environment state |
| 20 | virtual environment | | |
| 22 | visual interface | 138 | pilot voice recording |
| 24 | auditory interface | 140 | cockpit sounds |
| 30 | simulated flight demonstration | 142 | speakers |
| 32 | flight instructor | 144 | pilot voiceover |
| 34 | flight simulation data | 148 | sound system |
| 36 | annotations | 150 | simulated aircraft and environment |
| 38 | playback device | 152 | control loop |
| 40, 44, 46, 48 | recordings | 154 | simulation adjustments |
| 42A-42C | elements 110 flowchart | 156 | recorded simulation state |
| 112 | pose tracking system | 158 | recorded control element state |
| 114 | pilot body state | 160 | control action |
| 116 | aircraft simulation state | 162 | change detection |
| 118 | recorded state snapshot | 164 | control element position |
| 120 | control element system | 166 | recorded positions |
| 168 | live signal | 430 | validator |
| 170 | pilot pose tracking data | 432 | validated flight recording |
| 210 | flow diagram | 434 | checksum |
| 212 | storage device | 436 | storage device |
| 216 | evaluator | 438 | updated FSTD |
| 218 | request | 440 | replayed flight commands |
| 220 | approval | 442 | replay flight data |
| 222 | deploy | 510 | flow diagram |
| 224 | virtual playback | 610 | flow diagram |
| 226 | validation | | |
| 228 | commands | | |
| 310 | flow diagram | | |
| 312, 314, 316 | steps | | |
| 318 | validation process | | |
| 410 | flow diagram | | |
| 412, 414 | simulated flight data | | |
| 416 | FSTD | | |
| 418 | required data parser | | |
| 420 | required data | | |
| 422 | regulators | | |
| 424 | replay data parser | | |
| 426 | replay data | | |
| 428 | required replay data | | |

## Claims

1. A method of virtual reality flight simulation having a realistic instructor demonstration, the method comprising:
recording flight simulation data generated by an instructor user in a flight simulation training device (FSTD) to produce a simulated flight demonstration, the flight simulation data including flight visual re-creation data for recreating flight visuals, physical control element states, instructor user body states, and auditory data;
validating the simulated flight demonstration for correctness; and
playing the validated simulated flight demonstration to at least one trainee user in a virtual environment of the FSTD, the virtual environment being viewable by the trainee user on at least one visual interface, wherein the validated simulated flight demonstration includes time-synchronized playback of the recorded flight simulation data generated by the instructor user.

2. The method of claim 1, wherein the virtual environment includes a virtual reality (VR), augmented reality (AR), or mixed reality (MR) visualization of validated simulated flight demonstration.

3. The method of claim 1 or claim 2, further comprising (a) rendering the simulated flight demonstration at least once, whereby the simulated flight demonstration provides free head movement in the virtual environment, and optionally wherein rendering the simulated flight demonstration further comprises depicting object positional data within the virtual environment; and (b) wherein an image of the instructor user body is depicted in the virtual environment.

4. The method of any one of claims 1-3, wherein validating the simulated flight demonstration for correctness comprises:
extracting required data with a required data parser;
extracting replay data with a replay data parser;
determining overlap data between the extracted required data and the extracted replay data; and
comparing the overlap data with the extracted replay using a validator to thereby return a validated flight recording.

5. The method of any one of claims 1-4, further comprising mixing at least a portion of the fight visual re-creation data with a subsequent recording to provide the simulated flight demonstration with layered data.

6. A method of virtual reality flight simulation having a realistic instructor demonstration, the method comprising:
recording flight simulation data to produce a simulated flight demonstration, the flight simulation data including flight visual re-creation data for recreating flight visuals, physical control element states, instructor user body states, and auditory data;
validating the simulated flight demonstration for correctness; and
playing the validated simulated flight demonstration to at least one trainee user in a virtual environment of a flight simulation training device (FSTD), the virtual environment being viewable by the trainee user on at least one visual interface, wherein the validated simulated flight demonstration includes time-synchronized playback of the recorded flight simulation data.

7. The method of claim 6, wherein the flight simulation data is generated by at least one of:
an instructor user in the FSTD;
a non-simulated flight in an aircraft; or
the trainee user in a previous flight simulation.

8. The method of claim 6, wherein when the flight simulation data is generated form the non-simulated flight in the aircraft, at least a portion of the flight visual re-creation data is derived from at least one of:
a sensor carried on the aircraft; or
aircraft data from an aircraft bus.

9. The method of any one of claims 6-8, wherein (a) the virtual environment includes a virtual reality (VR), augmented reality (AR), or mixed reality (MR) visualization of validated simulated flight demonstration, and/or (b) further comprising rendering the simulated flight demonstration at least once, whereby the simulated flight demonstration provides free head movement in the virtual environment, and optionally wherein rendering the simulated flight demonstration further comprises depicting object positional data within the virtual environment.

10. The method of any one of claims 6-9, wherein validating the simulated flight demonstration for correctness comprises:
extracting required data with a required data parser;
extracting replay data with a replay data parser;
determining overlap data between the extracted required data and the extracted replay data; and
comparing the overlap data with the extracted replay using a validator to thereby return a validated flight recording.

11. The method of any one of claims 6-10, further comprising mixing at least a portion of the fight visual re-creation data with a subsequent recording to provide the simulated flight demonstration with layered data.

12. A method of virtual reality flight simulation having recording and realistic playback capabilities, the method comprising:
recording flight simulation data generated by a trainee user in a flight simulation training device (FSTD) during a flight training session, the flight simulation data including flight visual re-creation data for recreating flight visuals, physical control element states, trainee user body states, and auditory data; and
playing a recorded simulation formed from the recorded flight simulation data to the trainee user in a virtual environment of the FSTD, the virtual environment being viewable by the trainee user on at least one visual interface, wherein the recorded simulation includes time-synchronized playback of the recorded flight simulation data generated by the trainee user.

13. The method of claim 12, further comprising:
generating at least one additional recording;
combining the at least one additional recording with the recorded flight simulation data; and
playing the combined simulated flight demonstration with the at least one additional recording.

14. The method of claim 12 or claim 13, wherein the at least one additional recording further comprises at least one of: a voice recording, a text comment, an image, or a video recording.

15. The method of any one of claims 12-14, wherein the combined simulated flight demonstration with the at least one additional recording depicts an avatar of at least one of the trainee user or an instructor user in the virtual environment, and optionally wherein at least one of the trainee user or the instructor user is depicted partially transparent in the virtual environment.
